# EUROPÄISCHE PATENTSCHRIFT

(11) **EP 1 477 093 B1**
(45) Veröffentlichungstag und Bekanntmachung des Hinweises auf die Patenterteilung: **24.01.2007**
(21) Anmeldenummer: 04011401.9
(22) Anmeldetag: 13.05.2004
(51) Int. Cl.: A47J 31/52, A47J 31/40

(54) **Getränkeautomat**
Automatic beverage dispenser
Distributeur automatique de boissons

(30) Priorität: 16.05.2003 DE 20307664 U
(43) Veröffentlichungstag der Anmeldung: 17.11.2004
(73) Patentinhaber: WMF WÜRTTEMBERGISCHE METALLWARENFABRIK AG, 73309 Geislingen/Steige (DE)
(72) Erfinder: Bächer, Wilfrid, 89188 Merklingen (DE); Fuchs, Leonhard, 89558 Treffelhausen (DE); Hofmann, Uwe, 73337 Bad Überkingen (DE)
(74) Vertreter: Grünecker, Kinkeldey, Stockmair & Schwanhäusser Anwaltssozietät

(56) Entgegenhaltungen:
- WO-A-00/38120
- DE-A- 19 948 366
- US-A- 5 566 732

## Beschreibung

Die Erfindung bezieht sich auf einen Getränkeautomaten der im Oberbegriff von Anspruch 1 erläuterten Art.

Ein Getränkeautomat dieser Art ist aus der WO00/38120 bekannt. Diese Druckschrift beschreibt einen Verkaufsautomaten, der beispielsweise Getränke, wie Kaffee, Tee usw. portioniert ausgeben kann. Der Verkaufsautomat ist demzufolge mit mindestens einer Geldeingabe zur Erzeugung eines Guthabens versehen. Statt Geld kann auch eine Chipkarte eingegeben werden. Es ist weiterhin eine Bedieneinrichtung und ein Fingerprint-Sensorfeld als Teil einer Fingerprint-Erkennungseinrichtung vorgesehen. Der Benutzer, der eine im Verkaufsautomaten angebotene Ware erwerben möchte, muss zunächst ein Guthaben einrichten, indem er beispielsweise Geld einwirft oder seine Chipkarte zum Einlesen eingibt. Anschließend legt der Benutzer seinen Finger auf das Fingerprint-Sensorfeld und wählt über die Bedienungseinrichtung die gewünschte Ware aus. Die Ware wird ausgegeben und deren Preis vom Guthaben abgezogen.

Die US 5 566 732 beschreibt einen Getränkeautomaten zum Ausgeben von Getränken, der wiederum als reiner Verkaufsautomat ausgebildet ist. Es sind eine Vielzahl von Bedienknöpfen vorgesehen, mit denen der Benutzer die Getränke auswählen kann. Es ist ein Barcodeleser oder ein ähnliches Identifizierungsmittel vorgesehen, das in der Lage ist, entsprechend markierte Behälter zu identifizieren, wenn sie in den Getränkeautomaten zum Befüllen gestellt werden, wobei die Befüllung entsprechend der Markierung vorgenommen wird. Ein Fingerprint-Sensorfeld und eine Abrechnungseinrichtung mit eine Speicher sind nicht vorgesehen. Auch dieser Getränkeautomat eignet sich somit nicht zur Verwendung beispielsweise durch Kellner in Restaurants, um hier die Abrechnung zu verbessern.

Derartige Getränkeautomaten sind in großer Zahl auf dem Markt. Diese Getränkeautomaten enthalten eine Steuerung, die die Zubereitung und die Ausgabe von Getränken automatisch oder weitgehend automatisch übernimmt, sobald ein Benutzer einen entsprechenden Knopf oder eine entsprechende Taste oder dgl. betätigt hat. Moderne Getränkeautomaten, insbesondere moderne, automatisch oder weitgehend automatisch arbeitende Kaffeemaschinen sind in der Lage, eine Vielzahl von verschiedenen Kaffeegetränkensorten und andere Getränke, beispielsweise Tee, zuzubereiten und auszugeben. Insbesondere bei einer Versorgung in Betrieben mit einem großen, jedoch geschlossenen Benutzerstamm gestaltet sich jedoch die Abrechnung beispielsweise über die üblichen Strichlisten, relativ schwierig und aufwendig.

Andererseits sind jedoch sogenannte Kellner-Abrechnungssysteme bekannt, die bereits in großem Umfange eingesetzt werden. Kellner-Abrechnungssysteme arbeiten mit einem Identifikationsmittel wie beispielsweise einer Magnetkarte oder einem Kellnerstift, der vom Kellner immer mitgeführt werden muss. Diese Identifikationsmittel unterliegen jedoch einem gewissen Verschleiß (insbesondere Magnetkarten), brechen im rauen Alltagsbetrieb oder können verloren gehen und in falsche Hände geraten. Außerdem sind derartige Systeme bei einer Büroversorgung, bei der der einzelne Benutzer nur gelegentlich ein Getränk bezieht, zu umständlich.

Der Erfindung liegt somit die Aufgabe zugrunde, einen Getränkeautomaten mit einer verbesserten Abrechnungsmöglichkeit zu schaffen.

Die Aufgabe wird durch die im Anspruch 1 angegebene Erfindung gelöst.

Durch die erfindungsgemäße Ausgestaltung kann der Benutzer beim ersten Beziehen eines Getränks identifiziert werden und kann nachfolgend Getränke beziehen, ohne dass er eine Karte oder einen Stift oder ein anderes Identifikationsmittel mit sich führen muss.

Zwar sind biometrische Systeme, insbesondere Fingerprinterkennungssysteme bekannt, sie werden jedoch bislang nur als Sicherheitseinrichtungen zum Zwecke der Zugangs- oder Zugriffskontrolle, beispielsweise als Zugriffskontrolle für PC's oder als Ersatz von PIN-Codes für Kartenleseanwendungen oder als Wegfahrsperre bei Fahrzeugen oder dgl. eingesetzt.

Vorteilhafte Weiterbildungen der Erfindung sind den Unteransprüchen zu entnehmen.

Ein Ausführungsbeispiel der Erfindung wird nachfolgend anhand der Zeichnungen näher erläutert. Es zeigen:
- Fig. 1: eine Vorderansicht in schematischer Darstellung einer erfindungsgemäß ausgerüsteten Kaffeemaschine, und
- Fig. 2: eine schematische Darstellung der erfindungsgemäßen Steuerung.

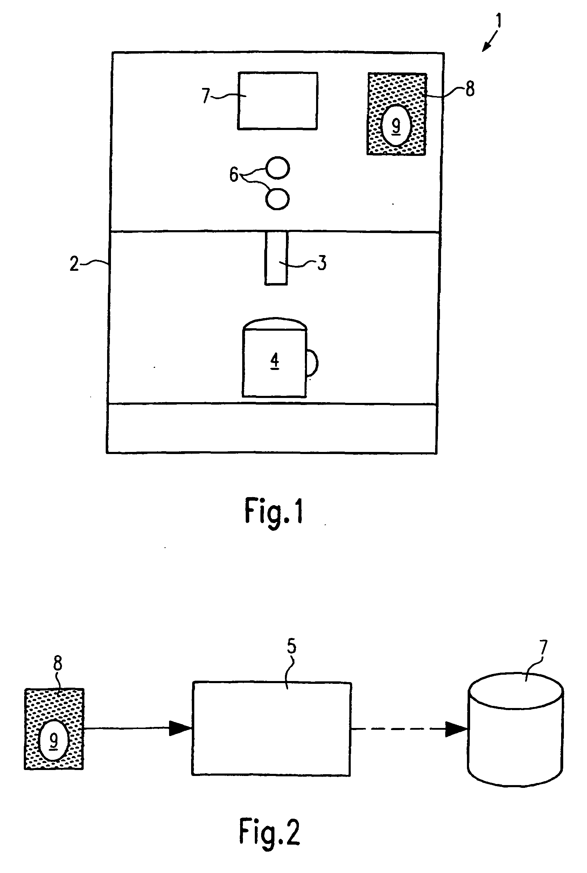

Aus Fig. 1 ist in schematischer Darstellung in Vorderansicht ein als Kaffeemaschine ausgebildeter Getränkeautomat 1 ersichtlich, der ein Gehäuse 2 aufweist, aus dem wenigstens ein Auslass 3 herausführt, unter den ein Gefäß 4, dargestellt ist eine Tasse, zum Befüllen gestellt werden kann.

Im Inneren der Kaffeemaschine 1 sind die üblichen, nicht gezeichneten Getränkezubereitungs- und -ausgabeeinrichtungen wie beispielsweise ein Heißwasserbereiter, eine Brüheinheit oder dgl., sowie eine Steuerung 5 (Fig. 2) untergebracht, die den Betriebsablauf dieser Zubereitungs- und Ausgabeeinrichtungen steuert. An der Außenseite des Gehäuses 2 sind, wie bei derartigen Kaffeemaschinen üblich, eine Vielzahl von Bedienknöpfen oder -tasten 6 vorgesehen, die mit der Steuerung 5 verbunden sind, und mit denen ein Benutzer die Zubereitung und die Ausgabe des von ihm gewünschten Getränkes einleiten kann. Zweckmäßigerweise ist weiterhin ein Display 7 vorgesehen, über das dem Benutzer notwendige Informationen vermittelt werden.

Die Steuerung 5 enthält weiterhin ein Abrechnungssystem, das mit einer Fingerprint-Erkennungseinrichtung 8 in Verbindung steht, die ebenfalls auf der Außenseite des Gehäuses 2 und bevorzugt in der Nähe der Bedienknöpfe 6 angeordnet ist. Die Fingerpring-Erkennungseinrichtung 8 enthält ein Sensorfeld 9, auf das der Benutzer seine Fingerkuppe legt. Die Fingerprint-Erkennungseinrichtung 8 enthält weiterhin einen integrierten Speicher und einen integrierten Rechner, mit denen der Finger eines Benutzers abgetastet, die Signale gespeichert und mit den Werten eines erneut aufgelegten Fingers verglichen werden.

Wird eine Fingerkuppe zum Einlesen oder Auswerten auf das Sensorfeld 9 gelegt, vermessen 65.000 Sensorelektroden den genauen Abstand zwischen Hautoberfläche und Sensor auf einen hundertstel Millimeter genau. In Sekundenbruchteilen erstellt der Sensor ein digitalisiertes Graustufenbild des Fingerabdrucks mit einer Auflösung von 20 Einzelpunkten je Millimeter (513 dpi). Eine bildverarbeitende Software sucht nach ein bis zwei Dutzend charakteristischen Merkmalen des Fingerabdruckes, den sogenannten Minutien, und speichert deren Lage und Ausrichtung. Bei der nachfolgenden Überprüfung vergleicht ein Auswerte-Algorithmus das Sensorbild mit den zuvor abgespeicherten Referenzdaten. Das Freigabesignal des Chips zur Aktivierung der Funktionen erfolgt nur, wenn beide Datensätze übereinstimmen.

Nun kann die Qualität der Abbildung durch verschiedenste Faktoren beeinträchtigt werden, etwa wenn die Haut der Fingerkuppe verschmutzt oder verletzt ist. Die Problemlösung für alle Fälle ist ebenso einfach wie effektiv: Das Einlernen von bis zu drei Fingern einer Person schafft eine hohe Erkennungssicherheit, ohne den Komfort wesentlich zu schmälern. Insgesamt können bis zu hundert Referenz-Abdrucke pro Sensor gespeichert werden. Auch legt der Benutzer seinen Finger nicht immer genau auf dieselbe Stelle der Sensoroberfläche. Mögliche Abweichungen in der Praxis können jedoch in der Einlernphase durch mehrfaches Versetzen des jeweiligen Fingers und durch die so entstehende Überdeckung zuverlässig kompensiert werden.

Der Integrationsgrad von Fingertip-Sensor, Speicher und Rechner ist sehr hoch. Auf einem einzigen Siliziumchip, mit einer Fläche von 160 Quadratmillimeter befinden sich Sensorfeld, Analog-Digital-Wandler, Ablaufsteuerung, Taktgeber und parallele Schnittstelle. Kernstück des Systems ist ein digitaler Signalprozessor als AuswerteEinheit. Über ein CAN-Busnetzwerk laufen Bedienerführungen und Signale zu den einzelnen Funktionen.

Der sogenannte kapazitive Fingertip-Sensor wird in der CMOS-Technik gefertigt, wie sie auch für konventionelle Speicherchips zum Einsatz kommt. Daraus ergeben sich im Vergleich zu Optik- oder Infrarot-Sensoren entscheidende Vorteile hinsichtlich Herstellungskosten und Bauraum.

Wird ein Benutzer identifiziert, so werden seine Daten im Abrechnungssystem der Steuerung 5 mit den von den Bedienknöpfen 6 kommenden Daten verknüpft und zum Zwecke einer späteren Abrechnung gespeichert. Weiterhin wird die Ausgabe eines Getränks gesperrt, wenn der Fingerprint des Benutzers nicht gespeichert ist.

Die vom Abrechnungssystem gesammelten Daten können entweder über eine Schnittstelle an einen weiteren Rechner oder einen Drucker geleitet werden, oder sie können an eine Datenbank 7 übertragen werden, die beispielsweise auch als zentrale Datenbank für eine Vielzahl von Getränkeautomaten dienen kann.

Die Speicherung der biometrischen (Fingerabdruck-)Daten des Benutzers können außer direkt auf dem Sensorsystem auch in der Steuerung 5 oder in der zentralen Datenbank 7 erfolgen, so dass an der Kaffeemaschine 1 nur das Sensorfeld 9 vorgesehen werden muss.

Weiterhin können die gewonnenen Daten über die Anzahl und Art der Produktbezüge, entweder kundenbezogen oder allgemein, auch für weitere Zwecke der Statistik und/oder der Lagerhaltung oder der Buchhaltung verwendet werden.

## Patentansprüche

1. Getränkeautomat (1), insbesondere Kaffeemaschine, mit einer Steuerung (5) zum Steuern einer Getränkezubereitungs- und -ausgabeeinrichtung sowie einer Abrechnungseinrichtung, mit einem Finterprint-Sensorfeld (9), das Teil einer Fingerprint-Erkennungseinrichtung (8) ist, die mit der Steuerung (5) verbunden ist, **dadurch gekennzeichnet daß** die Abrechnungseinrichtung einen Speicher enthält, welcher Daten über die Anzahl und Art der Produktbezüge und den durch die Fingerprint-Erkennungseinrichtung (8) identifizierten Benutzer speichert.

2. Getränkeautomat nach Anspruch 1, **dadurch gekennzeichnet, dass** die Steuerung (5) im Inneren des Getränkeautomaten (1) untergebracht ist und die Abrechnungseinrichtung enthält.

3. Getränkeautomat nach Anspruch 1, **dadurch gekennzeichnet, dass** die Abrechnungseinrichtung mit einer Datenbank (7) verbunden ist.

4. Getränkeautomat nach Anspruch 1, **dadurch gekennzeichnet, dass** die Abrechnungseinrichtung über eine Schnittstelle mit einem weiteren Rechner oder Drucker verbunden ist.

5. Getränkeautomat nach Anspruch 1, **dadurch gekennzeichnet, dass** die biometrischen Daten des Benutzers im Sensorsystem oder der Steuerung (5) oder einer zentralen Datenbank (7) speicherbar sind.

6. Getränkeautomat nach Anspruch 1, **dadurch gekennzeichnet, dass** die gewonnenen Daten über die Anzahl und Art der Produktbezüge kundenbezogen oder allgemein für Zwecke der Statistik und/oder der Lagerhaltung oder der Buchhaltung verwendbar sind.

7. Getränkeautomat nach Anspruch 1, **gekennzeichnet durch** eine Verbindung mit einer Datenbank (7), mit der das Abrechnungssystem einer Mehrzahl von Getränkeautomaten (1) verbindbar ist.

## Claims

1. Drinks vending machine (1), in particular coffee machine, with a control device (5) for controlling a drinks preparing and dispensing device as well as a billing device, with a fingerprint sensor zone (9) which forms part of a fingerprint detection device (8) which is connected to the control device (5), **characterised in that** the billing device contains a memory which stores data on the number and type of product purchases and the user identified by the fingerprint detection device (8).

2. Drinks vending machine according to claim 1, **characterised in that** the control device (5) is housed inside the drinks vending machine (1) and contains the billing device.

3. Drinks vending machine according to claim 1, **characterised in that** the billing device is connected to a database (7).

4. Drinks vending machine according to claim 1, **characterised in that** the billing device is connected by an interface to a further computer or printer.

5. Drinks vending machine according to claim 1, **characterised in that** the biometric data of the user can be stored in the sensor system or the control device (5) or a central database (7).

6. Drinks vending machine according to claim 1, **characterised in that** the data obtained on the number and type of product purchases can be used in relation to customers or generally for purposes of statistics and/or stock keeping or bookkeeping.

7. Drinks vending machine according to claim 1, **characterised by** a connection to a database (7) to which the billing system of a plurality of drinks vending machines (1) can be connected.

## Revendications

1. Distributeur automatique de boissons (1), en particulier machine à café, comprenant une commande (5) pour la commande d'un dispositif de préparation et de délivrance de boissons ainsi qu'un dispositif de décompte, avec une zone de détection d'empreinte digitale (9) qui fait partie d'un dispositif de reconnaissance d'empreinte digitale (8), lequel est relié à la commande (5), **caractérisé en ce que** le dispositif de décompte comprend une mémoire qui mémorise des données concernant le nombre et la nature des références de produit et l'utilisateur identifié par le dispositif de reconnaissance d'empreinte digitale (8).

2. Distributeur automatique de boissons selon la revendication 1, **caractérisé en ce que** la commande (5) est logée à l'intérieur du distributeur automatique de boissons (1) et comprend le dispositif de décompte.

3. Distributeur automatique de boissons selon la revendication 1, **caractérisé en ce que** le dispositif de décompte est relié à une banque de données (7).

4. Distributeur automatique de boissons selon la revendication 1, **caractérisé en ce que** le dispositif de décompte est relié par une interface à un autre ordinateur ou une autre imprimante.

5. Distributeur automatique de boissons selon la revendication 1, **caractérisé en ce que** les données biométriques de l'utilisateur peuvent être mémorisées dans le système de détection ou la commande (5) ou une banque de données (7) centralisée.

6. Distributeur automatique de boissons selon la revendication 1, **caractérisé en ce que** les données obtenues relatives au nombre et à la nature des références de produit sont spécifiques au client ou peuvent être utilisées de façon générale pour le besoin des statistiques et/ou du stockage ou de la comptabilité.

7. Distributeur automatique de boissons selon la revendication 1, **caractérisé en ce qu'**une liaison avec une banque de données (7), avec laquelle le système de décompte d'une pluralité de distributeurs automatiques de boissons (1) peut être reliée.
